# EUROPEAN PATENT APPLICATION

(11) **EP 2 668 880 A1**
(43) Date of publication of application: **04.12.2013**
(21) Application number: 12739236.3
(22) Date of filing: 17.01.2012
(51) Int. Cl.: A47J 31/00, A47J 31/44

(54) **COFFEE FOAMING DEVICE**

(30) Priority: 30.01.2011 CN 201120033697 U
(71) Applicant: Tsann Kuen (Zhangzhou) Enterprise Co., Ltd., Fujian 363000 (CN)
(72) Inventor: TAO, Jing, Fujian 363000 (CN); SHU, Caiyuan, Fujian 363000 (CN)
(74) Representative: Verscht, Thomas Kurt Albert
(86) International application number: PCT/CN2012/070456
(87) International publication number: WO 2012/100697

(57) **Abstract**

A device for producing small-bubbled foam comprises a coffee cartridge (1), wherein the centre of bottom of the coffee cartridge is disposed with a nozzle body (2), the nozzle body (2) is centrally and axially provided with a coffee channel (8), the end of the coffee channel (8) adjacent to the coffee cartridge (1) bottom is provided with a single hole metal strainer (3) and the other end of the coffee channel (8) has a baffle (6), a plurality of small holes (7) being provided between the baffle (6) and the side wall of the coffee channel (8); and an air inlet hole (5) in communication with the outside is provided on the side wall of the coffee channel (8) between the metal strainer (3) and the baffle (6). When the liquid coffee hits the bottom baffle (6) after being ejected at a high speed from the single hole metal strainer, the liquid coffee is dispersed and then mixed with air to generate small-bubbled foam, with air being sucked in through the side wall small holes (7) with the help of the pressure difference. When the liquid coffee continuously flows out, air also enters continuously through the small holes (7) to be mixed with the liquid coffee to generate small-bubbled foam, and abundant of small-bubbled foam is more able to win the favor of customers.

## Description

### Field of the invention

The present invention relates to a device for producing small-bubbled foam.

### Background of the invention

Coffee liquid is mixed from high pressure hot water and coffee powder in existing coffee machine, the coffee liquid flows out of the hole at the bottom of the coffee cartridge to the filter cone. As the coffee liquid and the air are not mixed sufficiently, it's short of small-bubbled foam and the coffee can not give out fragrance enough.

### Summary of the invention

The object of the present invention is to provide a device for producing small-bubbled foam to solve the technical problems of the existing technology. The device for producing small-bubbled foam is with rich foam and it gives out fragrance sufficiently.

The technical proposal of the present invention is as below:

A device for producing small-bubbled foam, comprising a coffee cartridge, wherein the centre of bottom of the coffee cartridge is disposed with a nozzle body, the nozzle body is centrally and axially provided with a channel, the end of the channel adjacent to the coffee cartridge bottom is provided with a single hole metal strainer and the other end of the channel has a baffle, a plurality of small holes are provided between the baffle and the side wall of the channel; and an air inlet hole in communication with the outside is provided on the side wall of the channel between the metal strainer and the baffle.

The single hole metal strainer is fixed to the coffee cartridge in interference fit way.

The baffle is circular plate shaped and horizontally disposed in the centre of the channel.

The top surface of the baffle is smooth or disposed with convex ribs or convex spots.

Four small holes are disposed between the baffle at the bottom and the side wall of the channel, four small holes are disposed in the baffle in the position besides the side wall and arranged with interval each 90 degrees.

The inlet hole on the side wall of the channel is near to the metal strainer.

When the liquid coffee hits the bottom baffle after being ejected at a high speed from the single hole metal strainer, the liquid coffee is dispersed and then mixed with air to generate small-bubbled foam, with air being sucked in through the side wall small holes with the help of the pressure difference; when the liquid coffee continuously flows out, air also enters continuously through the small holes to be mixed with the liquid to generate small-bubbled foam, the ratio of the small-bubbled foam can reach to 25% of the coffee. And abundant of small-bubbled foam is more able to win the favor of customers.

### Brief description of the drawings

Fig.1 illustrates the structure of the device for producing small-bubbled foam of the present invention.

Fig.2 illustrates the sectional view of the device for producing small-bubbled foam of the present invention.

Fig.3 illustrates the enlargement view of the A part in fig.2.

Fig.4 illustrates the top view of the device for producing small-bubbled foam of the present invention.

### Detailed description of the embodiments

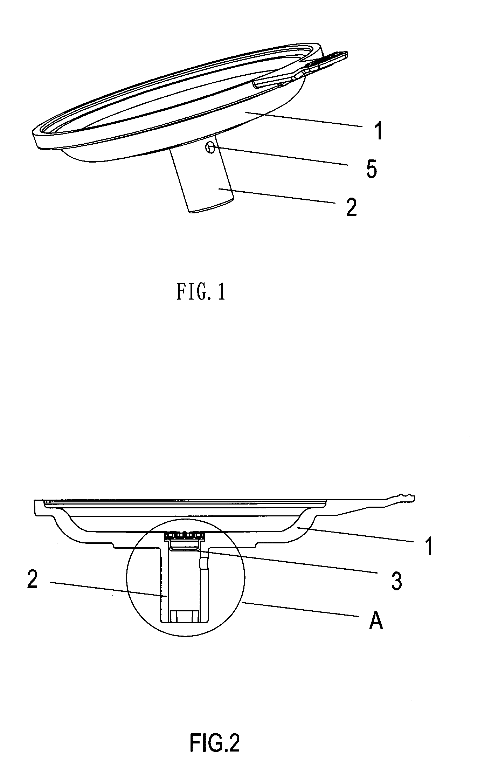

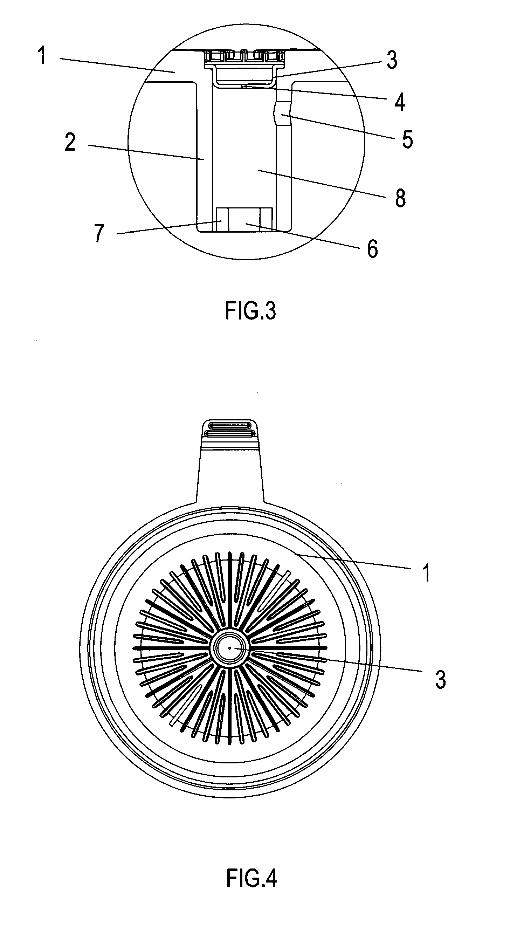

In this embodiment, refer to fig.1 to fig.3. a device for producing small-bubbled foam comprises a coffee cartridge 1, the centre of the bottom of the coffee cartridge 1 is disposed with a nozzle body 2, the nozzle body 2 is centrally and axially disposed with a coffee channel 8, the end of the coffee channel 8 adjacent to the bottom of the coffee cartridge 1 is disposed with a single hole metal strainer 3. The single hole metal strainer 3 is fixed to the coffee cartridge 1 in interference fit way; the single hole metal strainer 3 is disposed with a small hole 4 in the centre; the other end of the coffee channel 8 is disposed with a baffle 6, four small holes 7 are disposed in the baffle 6 in the position besides the side wall and the four small holes 7 are arranged in the baffle 6 in the position besides the side wall with interval each 90 degrees; an air inlet hole 5 in communication with the outside is disposed in the side wall of the nozzle body 2 between the metal strainer 3 and the baffle 6; the air inlet hole 5 is adjacent to the metal strainer 3, and the air inlet hole 5 can slant to one side with higher external end and lower internal end.

The diameter of the small hole 4 of the single hole metal strainer 3 is greatly smaller than the internal diameter of the coffee channel 8.

The baffle 6 is circular plate shaped, and it is horizontally disposed in the center of the channel, the top surface of the baffle 6 can be smooth or arranged with convex ribs to enhance the compact effect.

When the liquid coffee hits the bottom baffle 6 after being ejected at a high speed from the small hole 4 of the single hole metal strainer 3, under the work of the baffle 6 at the bottom, the liquid coffee is dispersed and then mixed with air to generate small-bubbled foam. When the coffee air flows out of the four holes 7 of the baffle at the bottom, pressure difference is generated inside the coffee channel, air being sucked in through the air inlet hole of the side wall is mixed with the coffee liquid from the small hole 4 of the metal strainer 3. When the liquid coffee continuously flows out, air also enters continuously through the small holes 7 to be mixed with the liquid to generate small-bubbled foam, the ratio of the small-bubbled foam can reach to 25% of the coffee.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

### Industrial applicability

The present invention is provided with a device for producing small-bubbled foam, in which when the liquid coffee hits the bottom baffle after being ejected at a high speed from the single hole metal strainer, the liquid coffee is dispersed and then mixed with air to generate small-bubbled foam, with air being sucked in through the side wall small holes with the help of the pressure difference; when the liquid coffee continuously flows out, air also enters continuously through the small holes to be mixed with the liquid to generate small-bubbled foam, and abundant of small-bubbled foam is more able to win the favor of customers.

## Claims

1. A device for producing small-bubbled foam, comprising a coffee cartridge, wherein the centre of bottom of the coffee cartridge is disposed with a nozzle body, the nozzle body is centrally and axially provided with a channel, the end of the channel adjacent to the coffee cartridge bottom is provided with a single hole metal strainer and the other end of the channel has a baffle, a plurality of small holes are provided between the baffle and the side wall of the channel; and an inlet hole in communication with the outside is provided on the side wall of the channel between the metal strainer and the baffle.

2. A device for producing small-bubbled foam according to claim 1, wherein the single hole metal strainer is fixed to the coffee cartridge in interference fit way.

3. A device for producing small-bubbled foam according to claim 1, wherein the baffle is circular plate shaped and horizontally disposed in the centre of the channel.

4. A device for producing small-bubbled foam according to claim 1, wherein the top surface of the baffle is smooth or disposed with convex ribs or convex spots.

5. A device for producing small-bubbled foam according to claim 1, wherein four small holes are disposed between the baffle at the bottom and the side wall of the channel, four small holes are disposed in the baffle in the position besides the side wall and arranged with interval each 90 degrees.

6. A device for producing small-bubbled foam according to claim 1, wherein the inlet hole on the side wall of the channel is near to the metal strainer.
